# EUROPEAN PATENT APPLICATION

(11) **EP 4 187 821 A1**
(43) Date of publication of application: **31.05.2023**
(21) Application number: 20948484.9
(22) Date of filing: 05.08.2020
(51) Int. Cl.: H04L 1/18

(54) **COMMUNICATION METHOD AND APPARATUS**

(71) Applicant: Huawei Technologies Co., Ltd., Shenzhen, Guangdong 518129 (CN)
(72) Inventor: HUANG, Qufang, Shenzhen, Guangdong 518129 (CN)
(74) Representative: Pfenning, Meinig & Partner mbB
(86) International application number: PCT/CN2020/107097
(87) International publication number: WO 2022/027311

(57) **Abstract**

A communication method and apparatus are provided. The method includes: receiving a data packet in a first cycle from a second communication apparatus within a first receive window, where the first receive window is determined based on a first moment at which the data packet in the first cycle arrives at the second communication apparatus and validity duration, and the validity duration is a validity time of the data packet in the first cycle; and delivering the data packet in the first cycle to an application layer within the first receive window. According to the method and apparatus in this application, only a data packet that arrives on time is delivered to the application layer, and a late data packet is not delivered to the application layer, thereby meeting a requirement of an industrial control system.

## Description

### TECHNICAL FIELD

This application relates to the field of communication technologies, and in particular, to a communication method and apparatus.

### BACKGROUND

With continuous evolution of a mobile communication system, a transmission capacity that can be provided by the mobile communication system becomes increasingly large, a data packet transmission delay becomes increasingly small, and the mobile communication system objectively has a capability of transmitting information in an industrial control system. In addition, with continuous improvement of industrial automation, industrial production gradually evolves toward a flexible production capacity and small-batch production. In a conventional industrial scenario, a wired system is used to transmit control information, and a production system has poor flexibility, and cannot flexibly adapt to a requirement of small-batch and diversified production. Therefore, an industrial scenario has an increasingly urgent demand for a wireless network system.

For application of a 3^{rd} generation partnership project (3^{rd} generation partnership project, 3GPP) network in an industrial control system, an industrial internet of things (industry internet of things, IIoT) feature is introduced into a 5^{th} generation (5^{th} Generation, 5G) communication system. Various functional nodes in the industrial control system are connected by using the 5G communication system. The functional nodes include an industrial controller for issuing a control command, a manipulator for receiving the control command, a configuration unit for configuring nodes such as the industrial controller and the manipulator, and the like. The 5G communication system provides a flexible routing mode. Various industrial controllers and manipulators can be quickly organized into different production lines, to achieve an objective of flexible deployment and adapt to a requirement of small-batch and diversified production. The industrial control system requires the 3GPP network to provide a "data packet that arrives on time". If a data packet does not arrive on time, an application layer considers that the data packet is unavailable. In a current solution, after receiving a data packet from the 3GPP network, a receiver of a control command delivers the data packet to the application layer regardless of whether the data packet arrives on time, and subsequently, the application layer also performs a corresponding action on the late data packet, affecting normal operation of the entire industrial control system.

### SUMMARY

Embodiments of this application provide a communication method and apparatus, to ensure that all data packets delivered by a receiver to an application layer are data packets that arrive on time, a late data packet is not delivered to the application layer, and all actions subsequently performed by the application layer are corresponding actions for the data packets that arrive on time, thereby ensuring normal operation of an entire industrial control system.

According to a first aspect, a communication method is provided. The method is performed by a first communication apparatus. The first communication apparatus may be a communication device, or a component (a chip, a circuit, or the like) in a communication device. The method includes: The first communication apparatus determines a first moment at which a data packet in a first cycle arrives at a second communication apparatus and validity duration of the data packet, where the validity duration is a validity time of the data packet in the first cycle. Optionally, the first communication apparatus may obtain the first moment and the validity duration from the second communication apparatus, or the first communication apparatus may obtain the first moment and the validity duration through calculation, or the first moment and the validity duration may be preconfigured for the first communication apparatus, or the like. The first communication apparatus receives the data packet in the first cycle from the second communication apparatus within a first receive window, where the first receive window is determined based on the first moment and the validity duration. The first communication apparatus delivers the data packet in the first cycle to an application layer within the first receive window.

The data packet in the first cycle that is received within the first receive window may be considered as a data packet that arrives on time. In implementation of the foregoing method, the first communication apparatus delivers only a data packet that arrives on time to the application layer, and does not deliver a late data packet to the application layer, thereby ensuring that all data packets delivered to the application layer are data packets that arrive on time, and meeting a requirement of an industrial control system.

In a possible design, a start moment of the first receive window is a first moment or a second moment, where a time difference between the second moment and the first moment is equal to a transmission delay of the data packet in the first cycle.

In a possible design, an end moment of the first receive window is a third moment, a fourth moment, or a fifth moment, where a time difference between the third moment and the first moment is equal to the validity duration, a time difference between the fourth moment and the first moment is equal to a sum of the validity duration and the transmission delay of the data packet in the first cycle, and a time difference between the fifth moment and the first moment is equal to a sum of the validity duration, the transmission delay of the data packet in the first cycle, and preset duration.

In implementation of the foregoing method, the start moment of the first receive window and the end moment of the first receive window may be randomly combined to constitute the first receive window. A manner of determining the first receive window is flexible, diverse, and easy to implement, and is applicable to industrial production.

In a possible design, the method further includes: when the data packet in the first cycle meets a first condition, delivering the data packet in the first cycle to the application layer within the first receive window; or when the data packet in the first cycle does not meet the first condition, skipping delivering the data packet in the first cycle to the application layer within the first receive window.

In implementation of the foregoing method, the data packet in the first cycle is delivered to the application layer only when the data packet in the first cycle meets the first condition; otherwise, the data packet in the first cycle is not delivered to the application layer, thereby avoiding delivering a data packet that does not meet the first condition to the application layer, and ensuring security, availability, or the like of a data packet delivered to the application layer.

In a possible design, the first condition includes at least one of the following: a quantity of data packets in the first cycle is equal to a first quantity, where the first quantity is preconfigured, or the first quantity is indicated by the second communication apparatus, or the first quantity is obtained by the first communication apparatus from the application layer; and a data volume of the data packet in the first cycle is equal to a first data volume, where the first data volume is preconfigured, or the first data volume is indicated by the second communication apparatus, or the first data volume is obtained by the first communication apparatus from the application layer.

The foregoing method is implemented mainly because information, namely, a message, in industrial control may be divided into a plurality of data packets (packets) due to a large size (for example, exceeding 1500 bytes). In this case, a plurality of packets received by a gNB are assembled into a message after arriving at an application layer. If UE delivers only some packets to the application layer, the application layer cannot obtain an original message through assembly. Therefore, the UE needs to deliver none of received packets to the application layer. In the foregoing method, it can be ensured that all data packets delivered to the application layer can be assembled into a message, thereby ensuring availability of the delivered data packets.

In a possible design, when the first quantity or the first data volume is indicated by the second communication apparatus, the method further includes: receiving a first control protocol data unit PDU from the second communication apparatus, where the first control PDU indicates the first quantity or the first data volume.

In implementation of the foregoing method, the first communication apparatus may determine a correspondence between a data packet and a receive window by using a parameter: "a quantity or a data volume of data packets in each cycle". This manner is applicable to a scenario in which a quantity of data packets in each cycle is the same. If a quantity of data packets in each cycle varies, the foregoing method has a poor effect. However, in the foregoing embodiment, a control PDU is used to indicate a first quantity or a first data volume of data packets in each cycle. This has high flexibility, and is applicable to a scenario in which a quantity of data packets in each cycle varies.

In a possible design, the receiving a first control PDU from the second communication apparatus includes: receiving the first control PDU from the second communication apparatus within the first receive window; or receiving the first control PDU from the second communication apparatus before the first receive window.

In implementation of the foregoing method, the first control PDU can be flexibly transmitted between the first communication apparatus and the second communication apparatus, and a transmission location of the first control PDU is flexible. For example, the first control PDU may be transmitted between transmission of data packets in the first cycle, or the first control PDU may be transmitted before the data packet in the first cycle is transmitted.

In a possible design, the receiving the first control PDU from the second communication apparatus within the first receive window includes: receiving the first control PDU from the second communication apparatus before the data packet in the first cycle arrives; receiving the first control PDU from the second communication apparatus after the data packet in the first cycle arrives; or receiving the first control PDU from the second communication apparatus after some of the data packets in the first cycle arrive.

In a possible design, the receiving the first control PDU from the second communication apparatus before the first receive window includes: receiving the first control PDU from the second communication apparatus within a K^{th} receive window before the first receive window, where K is a positive integer.

In a possible design, the first control PDU further indicates a quantity or a data volume of data packets in each cycle within duration of X, or the first control PDU further indicates a quantity or a data volume of data packets in each cycle within Y cycles, where X is a positive number, and Y is a positive integer.

In implementation of the foregoing method, it is assumed that a quantity or a data volume of data packets in each cycle changes rapidly, and therefore notification needs to be performed for each cycle. Actually, a quantity or a data volume of data packets transmitted within each receive window is a slowly changing value, and does not change within a period of time. In this case, the second communication apparatus may notify, by using a control PDU, the first communication apparatus of a quantity or a data volume of data packets in each cycle within a future period of time, to reduce overheads of control PDUs.

In a possible design, when the first quantity or the first data volume is indicated by the second communication apparatus, at least one of the data packets in the first cycle includes indication information, where the indication information indicates the first quantity or the first data volume.

In implementation of the foregoing method, at least one of the data packets in the first cycle carries indication information for the first quantity or the first data volume, and no additional indication is required, thereby reducing signaling overheads.

In a possible design, when the data packet in the first cycle does not meet the first condition, the data packet in the first cycle is deleted, and a start location of a packet data convergence protocol PDCP window is updated to a PDCP sequence number of a data packet to be received in a next cycle of the first cycle.

In a current solution, when only some of the data packets in the first cycle are received, the start location of the PDCP window points to a PDCP sequence number of a data packet that is not received in the first cycle. However, in the foregoing method, the start location of the PDCP window is updated to the PDCP sequence number of the data packet to be received in the next cycle, thereby reducing impact, on an entire communication process, of a data packet in the first cycle that fails to be transmitted.

In a possible design, each of the data packets in the first cycle includes first indication information, and the method further includes: when the first indication information included in each of the data packets in the first cycle indicates the first receive window, delivering the data packets in the first cycle to the application layer within the first receive window; or when the first indication information included in at least one of the data packets in the first cycle does not indicate the first receive window, skipping delivering the data packets in the first cycle to the application layer within the first receive window.

In implementation the foregoing method, a correspondence between a data packet and a receive window does not need to be additionally indicated, and each data packet carries indication information for a receive window corresponding to the data packet, thereby reducing signaling overheads.

In a possible design, that the first indication information indicates the first receive window specifically includes: the first indication information indicates a moment and/or an index of the first receive window, or the first indication information indicates a moment and/or an index of a first send window, where the first send window corresponds to the first receive window.

In implementation the foregoing method, a manner of indicating the first receive window is flexible and variable, and has high applicability.

According to a second aspect, an embodiment of this application further provides an apparatus. For beneficial effects, refer to the descriptions in the first aspect. The apparatus has a function of implementing the behavior in the method embodiment in the first aspect. The function may be implemented by executing corresponding hardware or software. The hardware or the software may include one or more units corresponding to the foregoing function. In a possible design, the apparatus includes: a communication unit, configured to receive a data packet in a first cycle from a second communication apparatus within a first receive window, where the first receive window is determined based on a first moment at which the data packet in the first cycle arrives at the second communication apparatus and validity duration of the data packet, and the validity duration is a validity time of the data packet in the first cycle; and a processing unit, configured to deliver the data packet in the first cycle to an application layer within the first receive window. These modules may perform corresponding functions in the method example in the first aspect. For details, refer to the detailed descriptions in the method example. Details are not described herein again.

According to a third aspect, an apparatus is provided. The apparatus may be the first communication apparatus in the method embodiment in the first aspect. The apparatus includes a communication interface and a processor, and optionally, further includes a memory. The memory is configured to store a computer program or instructions. The processor is coupled to the memory and the communication interface. When the processor executes the computer program or the instructions, the apparatus is enabled to perform the method performed by the first communication apparatus in the method embodiment in the first aspect.

According to a fourth aspect, a computer program product is provided. The computer program product includes computer program code. When the computer program code is run, the method performed by the first communication apparatus in the first aspect is performed.

According to a fifth aspect, this application provides a chip system. The chip system includes a processor, configured to implement the functions of the first communication apparatus in the method in the first aspect. In a possible design, the chip system further includes a memory, configured to store program instructions and/or data. The chip system may include a chip, or may include a chip and another discrete device.

According to a sixth aspect, this application provides a computer-readable storage medium. The computer-readable storage medium stores a computer program. When the computer program is run, the method performed by the first communication apparatus in the first aspect is implemented.

### BRIEF DESCRIPTION OF DRAWINGS

FIG. 1 is a schematic diagram of a network architecture according to an embodiment of this application;
FIG. 2 is a schematic diagram of an access network according to an embodiment of this application;
FIG. 3 is a schematic diagram of a 5G clock and a TSN clock according to an embodiment of this application;
FIG. 4a, FIG. 4b, and FIG. 4c are schematic diagrams of a data packet in each cycle;
FIG. 5a and FIG. 5b are schematic diagrams of a transmission delay and a data cycle;
FIG. 6 is a flowchart of a communication method according to an embodiment of this application;
FIG. 7 is a schematic diagram of a receive window according to an embodiment of this application;
FIG. 8 is a schematic diagram of an indication of a PDCP window according to an embodiment of this application;
FIG. 9 is a schematic diagram in which a data packet in each cycle carries an additional indication according to an embodiment of this application;
FIG. 10a, FIG. 10b, FIG. 10c, and FIG. 10d are schematic diagrams of transmitting a control PDU;
FIG. 11 is another schematic diagram of transmitting a control PDU according to an embodiment of this application;
FIG. 12 is a schematic diagram of a structure of an apparatus according to an embodiment of this application; and
FIG. 13 is a schematic diagram of another structure of an apparatus according to an embodiment of this application.

### DESCRIPTION OF EMBODIMENTS

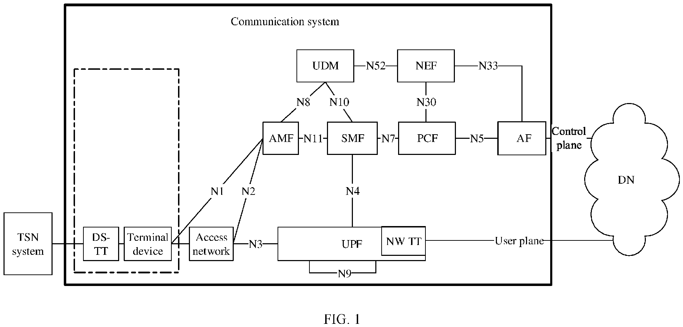

FIG. 1 is a diagram of a system architecture of an industrial internet of things. The system architecture includes at least one of the following: a time-sensitive network (time-sensitive network, TSN) system, a communication system, and a data network (data network, DN).

### 1. Communication system

The communication system includes an access network device and a core network device. The access network device may also be referred to as a radio access network (radio access network, RAN) device. Different access network devices may be connected through an Xn interface, and the access network device and the core network device may be connected through an NG interface.

The access network device is a device that connects a terminal device to a wireless network, and may provide functions such as radio resource management, quality of service management, and data encryption and compression for the terminal device. For example, the access network device may include the following several types:
1. a next generation node (next generation NodeB, gNB) that provides a control plane protocol and function and/or a user plane protocol and function of new radio (new radio, NR) for a terminal device, and that is connected to a core network, for example, a 5G core (5th generation core, 5GC); and
2. a next generation evolved node (next generation evolved NodeB, ng-eNB) that provides a control plane protocol and function and/or a user plane protocol and function of an evolved universal terrestrial radio access (evolved universal terrestrial radio access, E-UTRA) for a terminal device, and that is connected to a core network, for example, a 5GC.

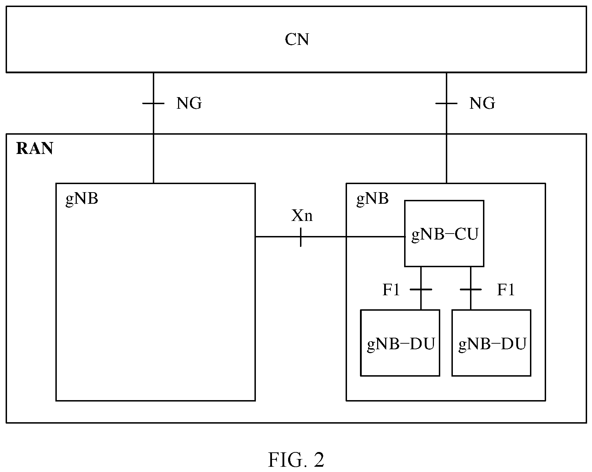

Further, as shown in FIG. 2, the access network device may include a central unit (central unit, CU) and a distributed unit (distributed unit, DU). To be specific, functions of the original access network device may be split, some functions of the original access network device are deployed in the CU, and remaining functions are deployed in the DU. A plurality of DUs share one CU, thereby reducing costs, and facilitating network expansion. Optionally, functions of the CU and the DU may be divided based on a protocol stack. For example, a radio resource control (radio resource control, RRC) layer, a service data adaptation protocol (service data adaptation protocol, SDAP) layer, and a packet data convergence protocol (packet data convergence protocol, PDCP) layer are deployed in the CU; and a remaining radio link control (radio link control, RLC) layer, medium access control (medium access control, MAC) layer, and physical (physical, PHY) layer are deployed in the DU. The CU and the DU may be connected through an FI interface. The CU may be connected to a core network through an NG interface on behalf of the access network device, or the CU may be connected to another access network device through an Xn interface on behalf of the access network device. Further, functions of the CU may be further divided into:
1. a central unit-control plane (central unit-control plane, CU-CP), mainly including control planes at the RRC layer and the PDCP layer in the CU; and
2. a central unit-user plane (central unit-user plane, CU-UP), mainly including user planes at the SDAP layer and the PDCP layer in the CU.

The core network device is mainly configured to manage a terminal device and provide a gateway for communicating with an external network. The core network device may include one or more of the following network elements:

A user plane function (user plane function, UPF) network element is mainly responsible for forwarding and receiving user data. In downlink transmission, the UPF network element may receive user data from a data network (data network, DN), and transmit the user data to the terminal device by using the access network device. In uplink transmission, the UPF network element may receive user data from the terminal device by using the access network device, and forward the user data to the DN. Optionally, a transmission resource and a scheduling function that are used by the UPF network element to provide a service for the terminal device may be managed and controlled by a session management function (session management function, SMF) network element.

An access and mobility management function (access and mobility management function, AMF) network element is mainly responsible for mobility management in a mobile network, for example, a user location update, network registration of a user, and a user handover.

An SMF network element is mainly responsible for session management in a mobile network, for example, session establishment, modification, and release. For example, specific functions are assigning an IP address to a user and selecting a UPF network element that provides a packet forwarding function.

A policy control function (policy control function, PCF) network element mainly supports providing a unified policy framework to control network behavior, and providing a policy rule for a control layer network function, and is responsible for obtaining user subscription information related to a policy decision.

An application function (application function, AF) network element mainly supports interaction with a 3^{rd} generation partnership project (3^{rd} generation partnership project, 3GPP) core network to provide a service, for example, influencing a data routing decision, providing a policy control function, or providing some third-party services for a network side.

A unified data management (unified data management, UDM) network element is mainly configured to generate an authentication credential, process a user identifier (for example, store and manage a permanent identity of a user), control access authorization, manage subscription data, and the like.

A network exposure function (network exposure function, NEF) network element is configured to provide a framework, authentication, and an interface that are related to network capability exposure, and transfer information between a network function of a 5G system and another network function.

It should be noted that the foregoing network elements in the core network may have different names in different communication systems. In the schematic diagram shown in FIG. 1, a 5th generation mobile communication system is used as an example for description, and is not construed as a limitation to this application.

Optionally, the communication system shown in FIG. 1 may further include a terminal device. The terminal device may be referred to as a terminal, and is a device with a wireless transceiver function. The terminal device may be deployed on land, including an indoor or outdoor scenario and a handheld or vehicle-mounted scenario, or may be deployed on water (for example, on a steamship), or may be deployed in the air (for example, on an airplane, a balloon, or a satellite). The terminal device may be a mobile phone, a tablet computer, a computer with a wireless transceiver function, a virtual reality (virtual reality, VR) terminal device, an augmented reality (augmented reality, AR) terminal device, a wireless terminal device in industrial control (industrial control), a wireless terminal device in self driving, a wireless terminal device in remote medical, a wireless terminal device in a smart grid, a wireless terminal device in transportation safety, a wireless terminal device in a smart city, a wireless terminal device in a smart home, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. Sometimes, the terminal device may also be referred to as user equipment (user equipment, UE), an access terminal device, a vehicle-mounted terminal device, an industrial control terminal device, a UE unit, a UE station, a mobile station, a mobile console, a remote station, a remote terminal device, a mobile device, a wireless communication device, a UE agent, a UE apparatus, or the like. The terminal device may also be fixed or mobile. This is not limited in embodiments of this application.

### 2. TSN system

For application of a 3GPP network in an industrial control system, an IIoT feature is introduced into a version R16 of 5G. Various functional nodes in the industrial control system are connected by using the 5G communication system. The functional nodes include an industrial controller for issuing a control command, an industrial terminal for receiving and executing the control command, for example, a manipulator, a configuration unit for configuring nodes such as the controller and the manipulator, and the like. The 5G system provides a flexible routing mode. Various industrial controllers and industrial terminals can be quickly organized into different production lines, to achieve an objective of flexible deployment and adapt to a requirement of small-batch and diversified production.

In data packets included in the industrial control system, most control data packets other than log data packets require real-time performance and determinism. The real-time performance may also be referred to as an ultrashort delay. The real-time performance is a requirement on a length of a transmission delay of a data packet. To be specific, it is required that the transmission delay of the data packet is not greater than T_delay. The determinism is a requirement on a jitter of a transmission delay of a data packet. To be specific, it is required that the transmission delay of the data packet is equal to T_delay. To meet the determinism requirement, a buffer needs to be added at a receiver. If a receiving time is earlier than an expected time, a data packet is buffered and then delivered. To meet the real-time performance requirement, in a wireless network, more radio resources and a more robust modulation and demodulation scheme need to be used for transmission, or a special scheduling manner, for example, an uplink scheduling-free mode, needs to be designed to reduce a transmission delay.

### 3. DN

The DN may be a service network that provides a data service for a user. For example, the DN may be an IP multimedia service (IP multi-media service) network or the Internet. A terminal device may establish a protocol data unit (protocol data unit, PDU) session from the terminal device to the DN, to access the DN.

As shown in FIG. 1, a part in a bold-line box in a middle part of FIG. 1 belongs to a communication system, and a part outside the bold-line box in the middle part of FIG. 1 belongs to an industrial control system. The communication system is connected to the industrial control system through two interfaces. The two interfaces may be a destination side TSN translator (destination side TSN translator, DS-TT) located on a terminal device side and a network-side TSN translator (network-side TSN translator, NW-TT) located on a UPF side. The two interfaces may cooperate to calculate a transmission delay experienced by IIoT control information passing the 5G communication system, that is, a delay of the IIoT control information passing the two interfaces. In actual deployment, the UPF and the UE maintain a same clock, which is referred to as a 5G clock. Without considering a drift factor, a 5G clock on the UPF side remains synchronized with a 5G clock on the UE side.

In a possible implementation, for downlink control information, when a piece of IIoT downlink control information passes the NW-TT on the UPF side, the UPF records a time corresponding to the moment. When the IIoT downlink control information arrives at the DS-TT on the UE side through a 5G network, the UE records a time corresponding to the moment. A transmission delay of the IIoT downlink control information passing the 5G network may be calculated based on time information recorded by the UPF and the UE.

In another possible implementation, a transmission delay of uplink data information passing the 5G network may be further calculated in the foregoing manner. For example, when a piece of uplink data information passes the DS-TT of the UE, the UE records a time corresponding to the moment. When the uplink data information arrives at the NW-TT on the UPF side through the 5G network, the UPF records a time corresponding to the moment. A transmission delay of the uplink data information passing the 5G network may be calculated based on time information recorded by the UE and the UPF.

Similar to the foregoing two manners, a delay of information transmitted between two UEs passing the 5G network may be further calculated in the foregoing manner. For example, when data information arrives at UE 1, the UE 1 records a time corresponding to the moment. The data information arrives at a UE 2 through transmission by the 5G network, and the UE 2 records a time corresponding to the moment. A transmission delay of the data information passing the 5G network may be calculated based on time information recorded by the UE 1 and the UE 2.

In the industrial control system, devices operate collaboratively, and need to be controlled based on a common clock, namely, a TSN clock. Precision of the TSN clock is related to a specific requirement of the industrial control system. Each specific production line may use its own TSN clock, and TSN clocks used by different production lines are independent of each other. FIG. 1 is used as an example. If different production lines transmit control information by using the 5G network, the control information of the production lines may be based on different TSN clocks, and the 5G network transparently transmits the control information. However, a transmission delay of the control information passing the 5G network needs to be measured, so that a receiver of industrial control information calculates the transmission delay of the 5G network, to accurately manage an execution time of each message. In the foregoing descriptions, the 5G network is used as an example for description, and is not construed as a limitation to embodiments of this application. For example, in embodiments of this application, data information, control information, and/or the like of the industrial control system may be transmitted by using a 4G communication system or a future 6G communication system.

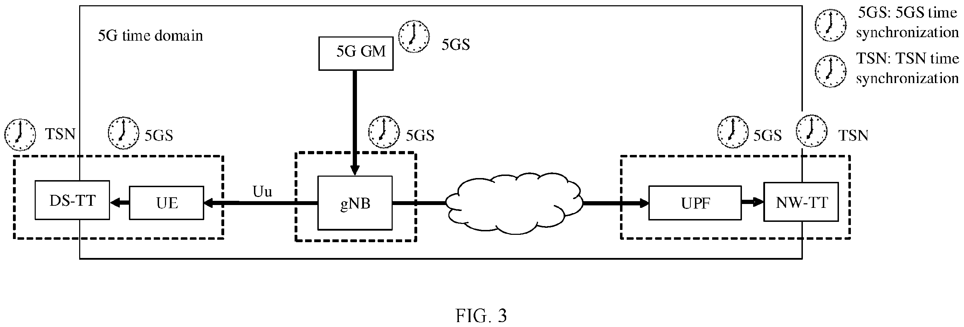

FIG. 3 shows a clock synchronization system in which a 5G network is used for industrial control. A middle part in FIG. 3 belongs to the 5G network. Network elements such as a UPF, a gNB, and UE in the 5G network all maintain a common clock, namely, a 5G clock. 5G clocks of all 5G network elements in FIG. 3 come from a same master clock, namely, a "5G master clock (5th generation grand master clock, 5G GM)". The 5G GM may be a global positioning system (global position system, GPS) module, and maintain a GPS time, or may be another type of high-precision clock. This is not limited. In addition, both an NW-TT on the UPF side and a DS-TT on the UE side maintain a common TSN clock. For example, when the UPF and the NW-TT belong to one physical entity, for example, when the NW-TT is an interface module embedded in the UPF, it may be considered that the UPF or the NW-TT maintains two clocks: a 5G clock and a TSN clock. Similarly, on the UE side, it may be considered that the UE or the DS-TT maintain two clocks: a 5G clock and a TSN clock. If a 5G system transmits control information of a plurality of production lines and each production line uses its own TSN clock, for example, a TSN 1 and a TSN 2, the UPF and the UE each may maintain a 5G clock and a plurality of TSN clocks. Optionally, the UE and the UPF usually maintain different quantities of TSN clocks. Further, a quantity of industrial terminals maintained by the UE is usually related to a quantity of production lines.

Based on the foregoing architecture, an industrial control data packet enters the 5G system through the NW-TT, passes network elements such as the UPF, the gNB, and the UE in the 5G network, and finally enters a data buffer of an industrial terminal through the DS-TT. The industrial terminal maintains a TSN clock, fetches a data packet from the buffer in each clock cycle, and performs a corresponding operation.

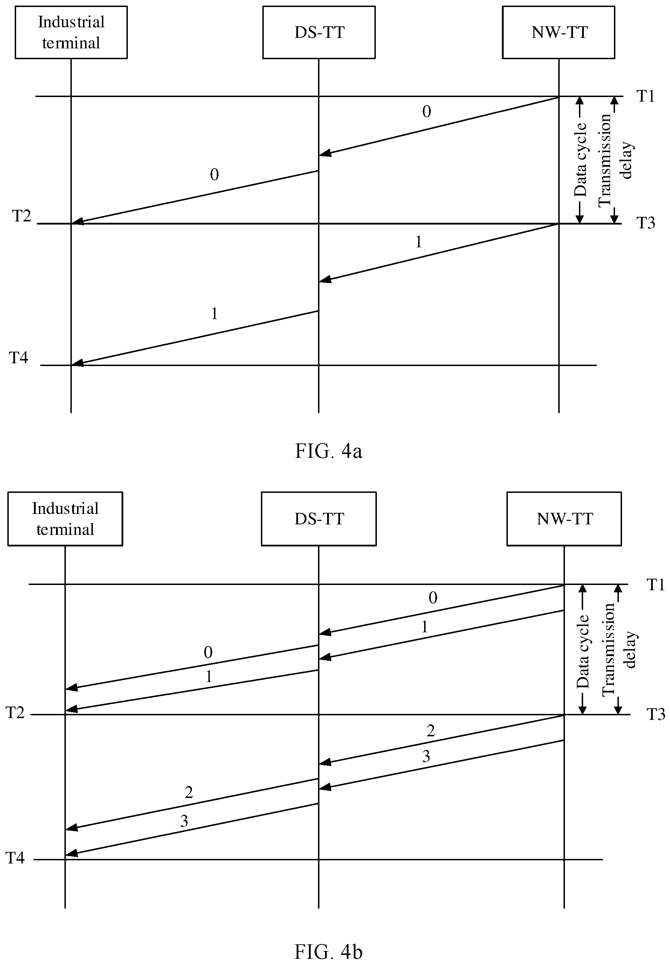

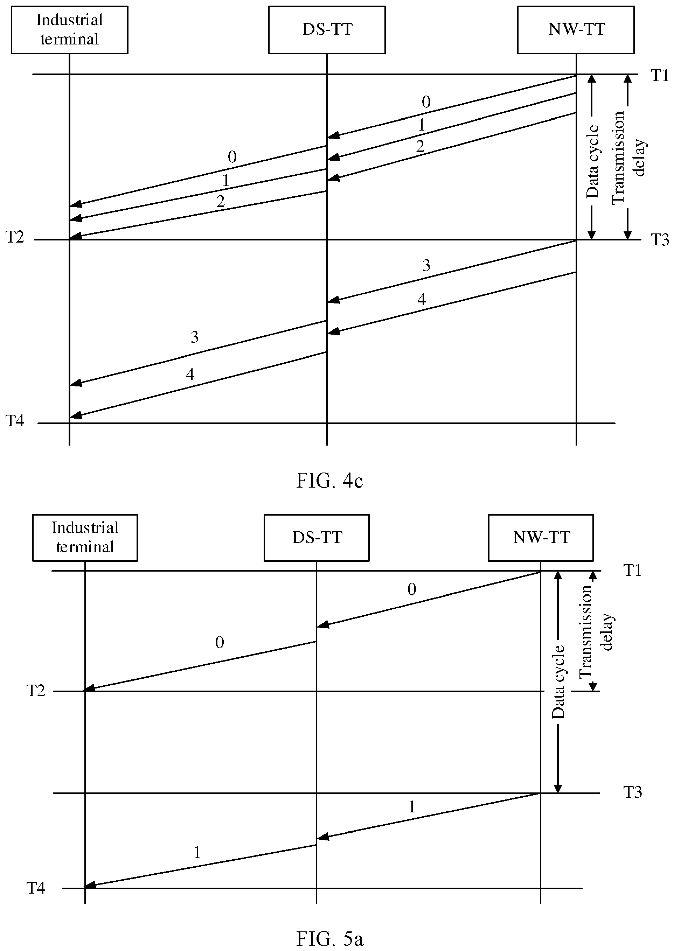

A wired bearer network corresponding to a conventional industrial control service is responsible for providing deterministic transmission for the conventional industrial control service. Therefore, industrial control data does not include an execution time of a data packet, and an industrial terminal maintains only one TSN clock, and fetches a data packet from a buffer at a determined moment based on the TSN clock for execution. As shown in FIG. 4a, FIG. 4b, or FIG. 4c, the industrial terminal fetches data packets from the buffer at moments T2 and T4 for execution. A quantity of data packets in each cycle may include three types:
Type 1: There is one data packet in each cycle.

As shown in FIG. 4a, in a first cycle, a data packet 0 in FIG. 4a enters a 3GPP network at a moment T1 of the TSN clock, and arrives at a buffer of a receiver before the moment T2, and the industrial terminal fetches the data packet 0 from the buffer at the moment T2 and executes the data packet 0. In a second cycle, a data packet 1 in FIG. 4a enters the 3GPP network at a moment T3, and arrives at the buffer of the receiver before the moment T4, and the industrial terminal fetches the data packet 1 from the buffer at the moment T4 and executes the data packet 1. T 1 to T3 may constitute a cycle, and T1 to T2 is a transmission delay of the data packet 0. When the transmission delay of the data packet 0 is equal to a data cycle, T2 is equal to T3.

Type 2: There are a plurality of data packets in each cycle, and a quantity of data packets in each cycle is the same.

A process is similar to that of the type 1. A difference lies in that there are a plurality of data packets in each cycle, and a quantity of data packets in each cycle is the same. As shown in FIG. 4b, a first cycle includes a data packet 0 and a data packet 1, and a second cycle includes a data packet 2 and a data packet 3.

Type 3: There are one or more packets in each cycle, and a quantity of data packets in each cycle varies.

A process is similar to that of the type 1. A difference lies in that there are one or more data packets in each cycle, and a quantity of data packets in each cycle is not necessarily the same. As shown in FIG. 4c, a first cycle includes a data packet 0, a data packet 1, and a data packet 2, and a second cycle includes a data packet 3 and a data packet 4.

In the examples of FIG. 4a, FIG. 4b, and FIG. 4c, a transmission delay is equal to a data cycle. This is true for most industrial control services. However, for a few services, a transmission delay may be unequal to a data cycle. Solutions in embodiments of this application are applicable to the following three scenarios:

A transmission delay is equal to a data cycle, as shown in FIG. 4a, FIG. 4b, or FIG. 4c.

A transmission delay is less than a data cycle. As shown in FIG. 5a, the data cycle is duration corresponding to T1 to T3, the transmission delay is duration corresponding to T1 to T2, and the moment T3 is later than the moment T2. Therefore, the transmission delay is less than the data cycle.

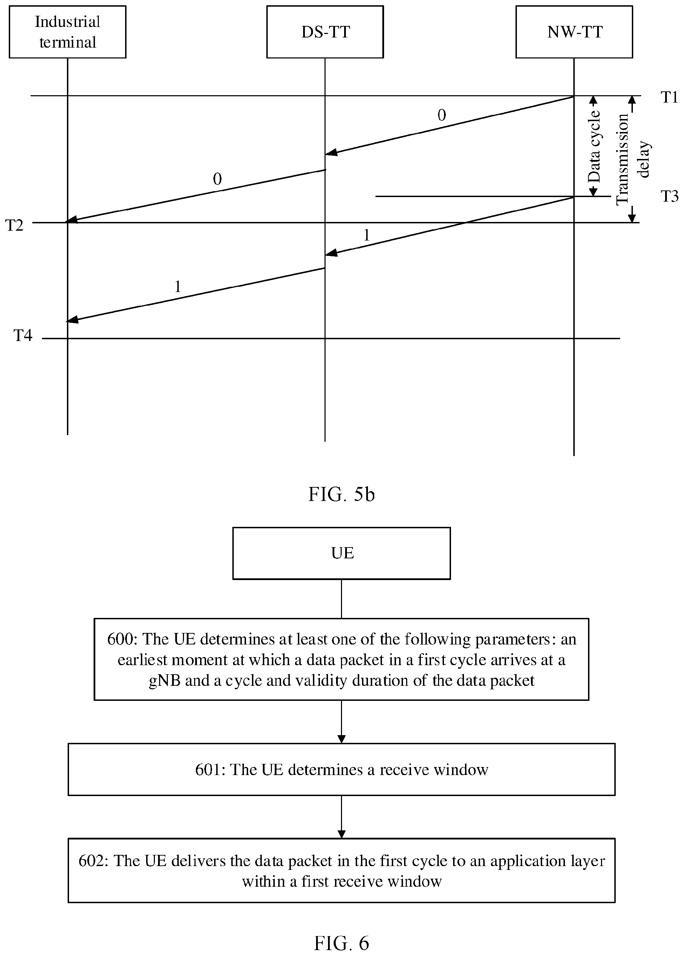

A transmission delay is greater than a data cycle. As shown in FIG. 5b, the data cycle is duration corresponding to T1 to T3, the transmission delay is duration corresponding to T1 to T2, and the moment T3 is earlier than the moment T2. Therefore, the transmission delay is greater than the data cycle.

In a possible implementation, the industrial controller may determine a traffic pattern (traffic pattern) of service data. The traffic pattern includes information such as an arrival time and a cycle of a data packet in each cycle. A core network node notifies the gNB of the traffic pattern. Because the gNB does not maintain a TSN clock, the core network node further needs to convert a "TSN clock-based" moment at which data in each cycle arrives into a 5G clock-based moment at which data in each cycle arrives. For example, the base station may obtain the following information: A data packet of a service arrives at the base station at 15 hours 30 minutes 28 seconds 540 ms on June 12, 2020 in 5G time, a cycle is 50 ms, and a transmission delay is 20 ms. In this case, the base station may learn through calculation that a data packet in a first cycle needs to arrive at the UE at 15 hours 30 minutes 28 seconds 560 ms on June 12, 2020 in 5G time, and a data packet in a second cycle is to arrive at the base station at 15 hours 30 minutes 28 seconds 590 ms on June 12, 2020 in 5G time, and needs to be delivered to the UE at 15 hours 30 minutes 28 seconds 610 ms on June 12, 2020 in 5G time.

In addition, the 3GPP has specified that an industrial control system requires a 3GPP network to provide a "data packet that arrives on time". If a data packet does not arrive on time, an application layer considers that the data packet is unavailable, and does not need to perform a corresponding action. To ensure that a data packet provided for an application layer is available, embodiments of this application provide two methods. A first method is that a lower-layer protocol stack of the application layer determines whether a data packet arrives on time, and if the data packet arrives on time, delivers the data packet to the application layer. A second method is that the application layer determines whether a data packet arrives on time, and if the data packet arrives on time, performs a corresponding action. Embodiments of this application focus on the first method.

Network architectures and service scenarios described in FIG. 1 to FIG. 5b are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

In the descriptions of this application, unless otherwise specified, "/" indicates an "or" relationship between associated objects. For example, A/B may indicate A or B. In this application, "and/or" describes only an association relationship for describing associated objects and indicates that three relationships may exist. For example, A and/or B may indicate the following three cases: Only A exists, both A and B exist, and only B exists. A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

Network elements included in embodiments of this application include an access network device, a terminal device, a core-network network element, an industrial controller, and the like. The access network device may be in a CU/DU architecture. In this case, the access network device includes two network elements: a CU and a DU. Alternatively, the access network device may be in a CP-UP architecture. In this case, the access network device includes three network elements: a CU-CP, a CU-UP, and a DU. Alternatively, the access network device may be in an open radio access network (Open radio access network, ORAN) architecture. In this case, the access network device includes four network elements: a CU-CP, a CU-UP, a DU, and a radio access network intelligent controller (RAN intelligent controller, RIC); or includes more network elements. Further, the DU may be further split into a DU-H, a DU-L, and the like, to support splitting at a lower layer such as a remote physical layer, and the like.

### Embodiment 1

An embodiment of this application provides a communication method, to address the foregoing technical issue of delivering a data packet that arrives on time to an application layer. The method includes: A first communication apparatus receives a data packet in a first cycle from a second communication apparatus within a first receive window, and the first communication apparatus delivers the data packet in the first cycle to an application layer or another layer within the first receive window, for example, at an end moment of the first receive window. The first receive window is determined based on a first moment at which the data packet in the first cycle arrives at the second communication apparatus and validity duration. The validity duration is a validity time of the data packet in the first cycle. The validity duration may be implemented by using a discard timer (discard timer), and fixed duration of the discard timer may be equal to the validity duration. This embodiment of this application is applicable to a scenario in which a plurality of data packets need to be delivered to an application layer as a whole. Use of the manner in this embodiment of this application in any scenario falls within the protection scope of this application. That the solution in this embodiment of this application is used in an industrial control scenario is merely used as an example for description, and is not construed as a limitation to embodiments of this application. For example, the solution in this embodiment of this application may be further applied to a multimedia video service or other scenarios in addition to the industrial control scenario.

Optionally, in a transmission mechanism of an existing 5G network, a mechanism of controlling transmission by using a discard timer is used. The foregoing example is still used. The data packet arrives at the gNB at 15 hours 30 minutes 28 seconds 540 ms on June 12, 2020 in 5G time, the transmission delay is 20 ms, and the data packet needs to arrive at the UE at 15 hours 30 minutes 28 seconds 560 ms on June 12, 2020. After receiving the data packet at 15 hours 30 minutes 28 seconds 540 ms on June 12, 2020, the gNB starts a discard timer, where duration of the timer is 20 ms. The discard timer expires at 15 hours 30 minutes 28 seconds 560 ms on June 12, 2020. If transmission of the data packet has not started, the data packet is discarded from a buffer and is not to be transmitted. However, if transmission of the data packet has started, the transmission of the data packet continues after the discard timer expires, until the transmission succeeds or until a sender gives up retransmission.

In a possible implementation, a terminal device (for example, UE) is connected to an industrial terminal, where the industrial terminal may include a sensor, a mechanical arm, and the like, and a core-network network element (for example, a UPF network element) is connected to an industrial controller. A process of transmitting an industrial control data packet by the industrial controller to the industrial terminal is as follows: the industrial controller -> the core-network network element -> an access network device -> the terminal device -> the industrial terminal. The solutions provided in this embodiment of this application mainly relate to data transmission between the access network device and the terminal device. In this implementation, the second communication apparatus may be the access network device or a component (a chip, a circuit, or another component) disposed in the access network device, and the first communication apparatus may be the terminal device, a component disposed in the terminal device, or the like.

In another possible implementation, a terminal device is connected to an industrial controller, and a core-network network element is connected to an industrial terminal. A process of transmitting an industrial control data packet by the industrial controller to the industrial terminal may be as follows: the industrial controller -> the terminal device -> an access network device -> the core-network network element -> the industrial terminal. The solutions provided in this embodiment of this application mainly relate to data transmission between the access network device and the terminal device. In this implementation, the second communication apparatus may be the terminal device or a component disposed in the terminal device, and the first communication apparatus may be the access network device or a component disposed in the access network device.

As shown in FIG. 6, a process of a communication method is provided. The process is described by using an example in which a first communication apparatus is UE and a second communication apparatus is a gNB. The process includes but is not limited to the following steps.

S600: The UE determines at least one of the following parameters: an earliest moment at which a data packet in a first cycle arrives at the gNB and a cycle and validity duration (for example, timing duration of a discard timer) of the data packet. For example, the UE may obtain at least one of the foregoing parameters from the gNB, or may obtain at least one of the foregoing parameters from an AMF or an SMF, or may obtain at least one of the foregoing parameters from an application layer, or the UE may even calculate at least one of the foregoing parameters. This is not limited.

The earliest moment at which the data packet in the first cycle arrives at the gNB, the cycle of the data packet, and the like may be described based on a 5G clock. For example, the earliest moment at which the data packet in the first cycle arrives at the gNB may be 15 hours 30 minutes 28 seconds 540 ms on June 12, 2020 in 5G time, and the cycle may be 50 ms. The UE may determine, based on the 5G time, a first receive window corresponding to the data packet in the first cycle.

Alternatively, the earliest moment at which the data packet in the first cycle arrives at the gNB, the cycle of the data packet, and the like may be based on a TSN clock. For example, the gNB obtains, from a core network node such as the AMF or the SMF or from an industrial controller, a TSN clock-based earliest moment at which the data packet in the first cycle arrives at the gNB, and then notifies the UE. In the foregoing process, the gNB may transparently forward the parameter, or may read the parameter and then notify the UE. After obtaining the earliest moment at which the data packet in the first cycle arrives at the gNB, the UE may construct the first receive window based on the TSN clock. Alternatively, the UE may directly obtain, from an application layer, for example, a DS-TT or an application layer of an industrial terminal device, a TSN clock-based earliest moment at which the data packet in the first cycle arrives at the gNB, the cycle of the data packet, and the like.

S601: The UE determines a receive window. Optionally, the UE may construct, based on an earliest moment at which data in each cycle arrives at the gNB and validity duration of the data, a receive window corresponding to a data packet in each cycle, for example, the first receive window corresponding to the data packet in the first cycle, and a second receive window corresponding to a data packet in a second cycle. In the following descriptions, how to construct the first receive window corresponding to the data packet in the first cycle and how to deliver the data packet in the first cycle within the first receive window are used as an example for description. Construction of a receive window corresponding to a data packet in another cycle and delivery of the data packet are similar to the foregoing process. Details are not described again. It should only be noted that, in step 600, the gNB notifies the UE only of the earliest moment at which the data packet in the first cycle arrives at the gNB. In this case, the UE may obtain, based on a cycle parameter, an earliest moment at which a data packet in another cycle arrives at the gNB. The foregoing example is still used. The gNB notifies the UE that the earliest moment at which the data packet in the first cycle arrives at the gNB is 15 hours 30 minutes 28 seconds 540 ms on June 12, 2020, and the cycle may be 50 ms. In this case, the UE may learn through calculation that an earliest moment at which the data packet in the second cycle arrives at the gNB is 15 hours 30 minutes 28 seconds 590 ms on June 12, 2020, and the like.

In the following descriptions, how to construct the first receive window corresponding to the data packet in the first cycle and how to deliver the data packet in the first cycle are used as an example for description.

Optionally, a start moment of the first receive window may be one of the following two moments:
1. A first moment: the earliest moment at which the data in the first cycle arrives at the gNB. Optionally, a time at which a data packet arrives at the gNB has a jitter due to uncertainty of a wireless transmission network. Because data is transmitted periodically, the earliest moment at which the data packet in the first cycle arrives at the gNB may be an earliest moment at which the data packet in the first cycle arrives at the gNB in a plurality of times of transmission. For example, in the first transmission, a moment at which the data packet in the first cycle arrives at the gNB is 13 hours 08 minutes 50 seconds 15 milliseconds; in the second transmission, a moment at which the data packet in the first cycle arrives at the gNB is 13 hours 08 minutes 50 seconds 17 milliseconds; and in the third transmission, a moment at which the data packet in the first cycle arrives at the gNB is 13 hours 08 minutes 50 seconds 14 milliseconds. In this case, it can be considered that the earliest moment at which the data packet in the first cycle arrives at the gNB is 13 hours 08 minutes 50 seconds 14 milliseconds.
2. A second moment: the earliest moment at which the data packet in the first cycle arrives at the gNB + a transmission delay of the data packet in the first cycle, where a time difference between the second moment and the first moment is the transmission delay of the data packet in the first cycle.

Optionally, an end moment of the first receive window may be one of the following three moments:
1. A third moment: the earliest moment at which the data packet in the first cycle arrives at the gNB + the validity duration (for example, the duration of the discard timer), where a time difference between the third moment and the first moment is equal to the validity duration.
2. A fourth moment: the earliest moment at which the data packet in the first cycle arrives at the gNB + the transmission delay of the data packet in the first cycle + the validity duration, where a time difference between the fourth moment and the first moment is equal to a sum of the validity duration and the transmission delay of the data packet in the first cycle.
3. A fifth moment: the earliest moment at which the data in the first cycle arrives at the gNB + the transmission delay of the data packet in the first cycle + the validity duration + preset duration delta, where a time difference between the fifth moment and the first moment is equal to a sum of the validity duration, the transmission delay of the data packet in the first cycle, and the preset duration.

Optionally, the transmission delay of the data packet in the first cycle may be indicated by the gNB to the UE in step S600, or may be obtained by the UE through measurement. For example, the UE infers the transmission delay of the data packet in the first cycle based on an uplink synchronization parameter: a timing advance (timing advance, TA).

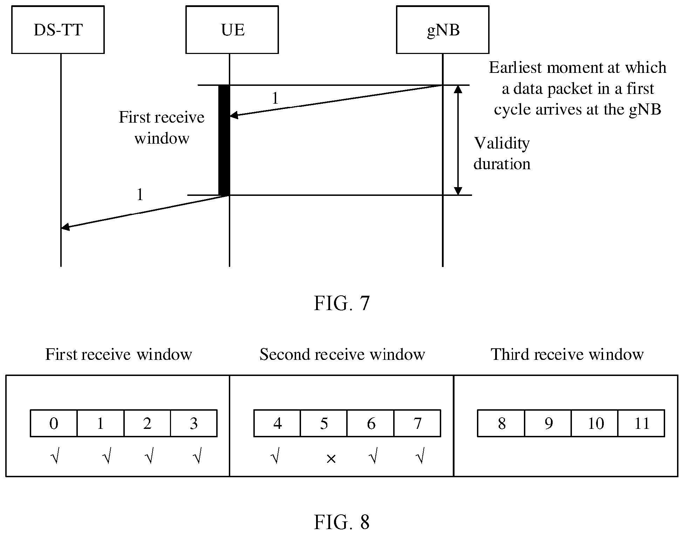

The start moment of the first receive window and the end moment of the receive window may be randomly combined to constitute the first receive window. In FIG. 7, the first receive window is determined by using an example in which the start moment is the earliest moment at which the data packet in the first cycle arrives at the gNB, and the end moment is the earliest moment at which the data packet in the first cycle arrives at the gNB + the validity duration. If the data packet in the first cycle, namely, a data packet 1, is received within the receive window, the data packet 1 is delivered to an upper layer (for example, the DS-TT) at the end moment of the first receive window.

S602: The UE delivers the data packet in the first cycle to the application layer within the first receive window. For example, after receiving all data packets in the first cycle within the first receive window, the UE may directly deliver the data packets to the application layer, without waiting until the end moment of the first receive window; or the UE waits until the end moment of the first receive window, and then delivers the data packets in the first cycle to the application layer

It should be noted that the "application layer" included in the descriptions of this application may be alternatively replaced with the "upper layer". An "access layer" may include one or more of an SDAP layer, a PDCP layer, an RLC layer, a MAC layer, or a PHY layer. The upper layer may include an application (application, APP) layer. The access layer and the upper layer may be adjacent or non-adjacent protocol layers. This is not limited. For example, there may be alternatively an internet protocol (internet protocol, IP) layer, a transmission control protocol (transmission control protocol, TCP) layer, a user datagram protocol (user datagram protocol, UDP) layer, or the like between the upper layer and the access layer. This is not limited.

Optionally, in S602, specifically, when the data packet in the first cycle meets a first condition, the UE may deliver the data packet in the first cycle to the application layer within the first receive window; or when the data packet in the first cycle does not meet the first condition, the UE may not deliver the data packet in the first cycle to the application layer within the first receive window. For example, the first condition includes at least one of the following:
1. A quantity of data packets in the first cycle is equal to a first quantity, where the first quantity is preconfigured, or the first quantity is indicated by the gNB, or the first quantity is obtained by the UE from the application layer

For example, the UE may obtain an additional parameter: "a quantity of data packets in each cycle", where a quantity of data packets in each cycle is the same. The UE determines, based on the quantity of data packets in each cycle, behavior of delivering the data packets to the application layer. For example, if the quantity of data packets in each cycle is 2, the UE determines, at the end moment of the first receive window, whether a quantity of data packets in the first cycle that are received within the window is 2, and if the quantity is 2, delivers the data packets in the first cycle to the application layer, or if the quantity is not 2, does not deliver the data packets in the first cycle to the application layer. Optionally, the UE may discard the two data packets that are not to be delivered to the application layer. The UE may be notified of the quantity of data packets in each cycle through a path of the industrial controller -> the core network node SMF -> the core network node AMF -> the gNB -> the UE, or the UE may obtain the quantity of data packets in each cycle from the DS-TT or the application layer of the industrial terminal. This is not limited.

The foregoing enhanced operation is performed mainly because information, namely, a message, in industrial control may be divided into a plurality of data packets (packets) due to a large size (for example, exceeding 1500 bytes). In this case, a plurality of packets received by the gNB are assembled into a message after arriving at the application layer. If the UE delivers only some packets to the application layer, the application layer cannot obtain an original message through assembly. Therefore, the UE needs to deliver none of received packets to the application layer. It should be noted that the " quantity of data packets in each cycle" includes only data packets transmitted by the PDCP, and does not include a PDCP control PDU generated by the PDCP or a control PDU generated by the SDAP.

Optionally, the foregoing parameter, namely, the quantity of data packets in each cycle, may be a value, or may be an array including a plurality of values. If the parameter is a value, the quantity of data packets in each cycle is the same, for example, 2, indicating that the quantity of data packets in each cycle is 2. If the parameter is an array, the quantity of data packets in each cycle varies, for example, 12, 3, 6, 4}, indicating that a quantity of data packets in the first cycle is 2, a quantity of data packets in the second cycle is 3, a quantity of data packets in the third cycle is 6, a quantity of data packets in the fourth cycle is 4, a quantity of data packets in the fifth cycle is 2 again, and so on.

It should be noted that the SDAP layer above the PDCP layer of the gNB may generate an SDAP control PDU, and a PDCP SN is allocated to the control PDU at the PDCP layer. During processing, the UE may determine, based on a size of a data packet, whether the data packet is an SDAP control PDU, and if the data packet is an SDAP control PDU, does not count the data packet. For example, the UE receives four data packets within the first receive window. When finding through processing that one of the four data packets is an SDAP control PDU, the UE considers that a quantity of data packets in the first cycle that are received within the first receive window is 3, but not 4. Optionally, the SDAP usually generates only one type of SDAP control PDU, and a size of the SDAP control PDU is 1 byte (byte). Another data packet has at least 2 bytes (1 byte for a data load and 1 byte for an SDAP packet header) after the packet header is added by the SDAP. Therefore, the UE may determine, based on a size of a PDCP SDU, whether a data packet is an SDAP control PDU. For example, when a size of a data packet is small, for example, close to 2 bytes, the data packet may be considered as an SDAP control PDU.

2. A data volume of a data packet in the first cycle is equal to a first data volume, where the first data volume is preconfigured, or the first data volume is indicated by the gNB, or the first data volume is obtained by the UE from the application layer. This is not limited.

For example, the UE may obtain an additional parameter: "a data volume of a data packet in each cycle". The data volume of the data packet in each cycle may be a value, an array, or the like. If a data volume of a data packet in the first cycle that is received by the UE within the first receive window is less than the first data volume, the UE does not deliver the data packet to the application layer. Optionally, the UE may discard the data packet that is not to be delivered to the application layer. In addition, it should be noted that, when the UE collects statistics on the data volume of the data packet in each cycle, a data volume of an SDAP control PDU or the like needs to be excluded. A specific process is similar to that in the foregoing example. Details are not described again.

It should be noted that indication information may be added to the data packet in the first cycle to notify the UE of the first quantity or the first data volume. For example, at least one of the data packets in the first cycle may carry the indication information for the first quantity or the first data volume. Alternatively, additional indication may be performed by using a control PDU. A manner of performing additional indication by using a control PDU is described in detail in the following embodiment.

3. A PDCP sequence number (sequence number, SN) of the data packet in the first cycle meets a preset condition. Assuming that the quantity of data packets in the first cycle is 4, the UE may determine whether PDCP sequence numbers of the data packets in the first cycle are N, N+1, N+2, and N+3, where N is a positive integer. When a value of N is 4X, the preset condition may be specifically whether the PDCP sequence numbers of the data packets in the first cycle are 4X, 4X+1, 4X+2, and 4X+3, where X is 0 or a positive integer. If the four data packets received by the UE meet the preset condition, the UE delivers the data packets to the application layer; otherwise, the UE does not deliver the data packets to the application layer. Specifically, if the PDCP SNs corresponding to the four data packets received by the UE are 4, 5, 6, and 7, the UE delivers the data packets to the application layer; or if the PDCP SNs corresponding to the four data packets received by the UE are 7, 8, 9, and 10, the UE does not deliver the data packets to the application layer

Optionally, if the data packet in the first cycle that is received within the first receive window does not meet the first condition, for example, if the quantity of data packets in the first cycle is less than the first quantity, the UE (for example, the PDCP layer of the UE) may perform the following operations:
1. Clear a current receive buffer, that is, delete the data packet in the first cycle.
2. Update a PDCP layer parameter. Specifically, a start location of a PDCP window may be updated. For example, the start location of the PDCP window is updated to a PDCP SN of a data packet that is to be received but has not been received in a next cycle after the first cycle.

As shown in FIG. 8, for example, a cycle and a transmission delay of a data packet are the same, and each cycle includes four data packets. At the end moment of the first receive window corresponding to the first cycle, after data packets 0 to 3 in the first cycle are received, the start location of the PDCP window of the UE is updated to a next to-be-received data packet, namely, a data packet 4, in the second cycle. At an end moment of the second receive window corresponding to the second cycle, the UE has not received four data packets. For example, the UE receives only data packets 4, 6, and 7, and has not received a data packet 5. In this case, the start location of the PDCP window of the UE is updated to a data packet 8 in the third cycle. After that, even if the UE receives the data packet 5 in the second cycle, the UE does not deliver the data packet to the application layer. Optionally, if a data packet of the UE is an SDAP control PDU, processing for the PDCP layer window is slightly different. For example, if the UE determines that the received data packet 8 in the third cycle is an SDAP control PDU, the UE updates the start location of the PDCP window to a data packet 9 in the third cycle at the end moment of the second receive window corresponding to the second cycle.

For another example, the first cycle includes four data packets 0, 1, 2, and 3, and the second cycle includes four data packets 4, 5, 6, and 7. At the end moment of the receive window corresponding to the first cycle, the UE receives a total of six data packets: 0, 1, 3, 4, 5, and 6. In this case, the start location of the PDCP window of the UE is not updated to the first data packet, namely, the data packet 4, in the second cycle, but is updated to a data packet, namely, the data packet 7, that has not been received in the second cycle.

Optionally, the processing for the PDCP layer window may be alternatively performed at the RLC layer. For example, when the UE determines not to deliver the data packet in the first cycle to the application layer, the RLC layer of the UE clears a current buffer, discards the data packet in the first cycle, updates an RLC parameter, and updates a start location of an RLC window to a PDCP SN of a data packet to be received in a next cycle after the first cycle. Alternatively, the processing for the PDCP window may be jointly performed by the PDCP layer and the RLC layer. For example, the PDCP layer performs an operation of clearing a buffer, and the RLC layer performs an operation of updating a parameter.

An industrial control system requires a 3GPP network to provide a "data packet that arrives on time". If a data packet does not arrive at an application layer of a receiver on time, the application layer of the receiver considers that the data packet is unavailable. In implementation of the method in Embodiment 1, the UE delivers a data packet received by the UE within the first receive window to the application layer, and does not deliver a data packet received beyond the first receive window to the application layer, thereby ensuring that all data packets delivered to the application layer are data packets that arrive on time, and meeting the requirement of the industrial control system. Correspondingly, a person skilled in the art should understand that, when the receiver is an access network device, the access network device also delivers only a data packet that arrives on time to the application layer, and does not deliver a late data packet to the application layer, thereby ensuring that all data packets delivered to the application layer are data packets that arrive on time, and meeting the requirement of the industrial control system.

### Embodiment 2

In Embodiment 1, the UE may determine a correspondence between a data packet and a receive window by using a parameter: "a quantity or a data volume of data packets in each cycle". For a video service in industrial production, each cycle includes one video frame, and sizes of different video frames vary significantly, and range from 15 Kbytes to 250 Kbytes. When a transport layer splits a video frame into data packets with a size of 1500 bytes, video frames with different sizes include different quantities of data packets. A larger video frame corresponds to a larger quantity of data packets, and a smaller video frame corresponds to a smaller quantity of data packets. For this scenario, Embodiment 2 provides another method for determining a correspondence between a data packet and a receive window.

For example, indication information may be added to a data packet in each cycle to indicate a receive window corresponding to the data packet, and an indicated object of the indication information may be an index, a start moment, an end moment, or any moment of the corresponding receive window, or may even be an index, a start moment, an end moment, any moment, or the like of a send window corresponding to the receive window. A data packet in a first cycle and that the data packet in the first cycle corresponds to a first receive window are used as examples below for description.

Each of the data packets in the first cycle may include first indication information. When the first indication information included in each of the data packets in the first cycle indicates the first receive window, the data packets in the first cycle are delivered to an application layer within the first receive window. Alternatively, when first indication information included in at least one of the data packets in the first cycle does not indicate the first receive window, the data packets in the first cycle are not delivered to the application layer within the first receive window.

Optionally, that the first indication information indicates the first receive window specifically includes: the first indication information indicates a moment or an index of the first receive window; or the first indication information indicates a moment or an index of a first send window, where the first send window corresponds to the first receive window.

In this embodiment of this application, a gNB may indicate, by using a reserved bit in a packet header of a data packet in each cycle, a receive window corresponding to the data packet. Optionally, the gNB may add indication information for the receive window to all or some data packets in a cycle. In the following example, an example in which the indication information for the receive window is added to all data packets in a cycle is used for description. The reserved bit may be in a PDCP packet header, an RLC packet header, or a MAC subheader. If the reserved bit is in an RLC packet header or a MAC subheader, when the data packet is segmented by an RLC layer, an indication in each RLC segment is the same. A length of the reserved bit may be 1 bit, 2 bits, more bits, or the like. Optionally, the length of the reserved bit may depend on a proportional relationship between a length of the receive window and a transmission delay. For example, when the transmission delay is fixed, a shorter length of the receive window indicates a larger quantity of receive windows and a longer length of the reserved bit, and a longer length of the receive window indicates a smaller quantity of receive windows and a shorter length of the reserved bit. Optionally, a specific length of the reserved bit may be determined by the gNB and indicated to the UE by using RRC signaling. In the following embodiment of this application, an example in which the reserved bit is 2 bits may be used for description.

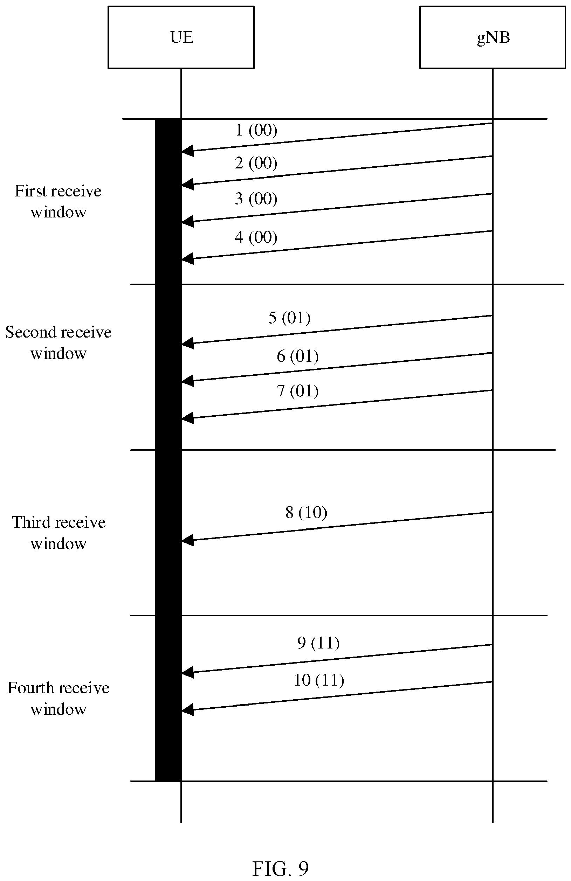

For example, as shown in FIG. 9, indication information corresponding to the first receive window is 00, indication information corresponding to a second receive window is 01, indication information corresponding to a third receive window is 10, and indication information corresponding to a fourth receive window is 11. The gNB adds an indication "00" to packet headers corresponding to four data packets 1, 2, 3, and 4 in the first cycle, and the four data packets 1, 2, 3, and 4 in the first cycle are delivered to the application layer only when the four data packets 1, 2, 3, and 4 arrive at the UE within the first receive window. The gNB adds an indication "01" to packet headers corresponding to three data packets 5, 6, and 7 in a second cycle. In this case, the three data packets 5, 6, and 7 in the second cycle are delivered to the application layer only when the three data packets 5, 6, and 7 arrive at the UE within the second receive window. The gNB adds an indication "10" to packet headers corresponding to a data packet 8 in a third cycle, and the data packet 8 in the third cycle is delivered to the application layer only when the data packet 8 arrives at the UE within the third receive window. Likewise, the gNB adds an indication "11" to packet headers corresponding to data packets 9 and 10 in a fourth cycle, and the data packets 9 and 10 in the fourth cycle are delivered to the application layer only when the data packets 9 and 10 arrive at the UE within the fourth receive window. Optionally, if the reserved bit is a bit in an RLC packet header or a bit in a MAC subheader, the RLC layer or a MAC layer needs to notify a PDCP layer of the reserved bit, and the notification may be performed by using a primitive or inter-layer information between different layers.

In the foregoing solution, the gNB adds an indication to a packet header of a data packet, to notify the UE of a receive window to which each data packet belongs. This is an indirect indication method. Actually, a direct indication manner may also be used. For example, a field is added to a packet header of each data packet, to indicate a start moment, an end moment, and the like of a receive window or a send window corresponding to the data packet. In this way, the UE may directly determine, according to the indication, a receive window to which each data packet belongs. Optionally, the field newly added to the packet header of each data packet may indicate at least one of the following content:
indicating a start moment of a send window, indicating an end moment of a send window, or indicating any moment of a send window (in this manner, it is required that send windows not overlap each other); or indicating a start moment of a receive window, indicating an end moment of a receive window, or indicating any moment of a receive window (in this manner, it is required that receive windows not overlap each other).

Optionally, the foregoing moments are moments represented by using a 5G clock, moments represented by using a TSN clock, or the like. This is not limited. Optionally, both the direct indication and the indirect indication are described by using an example in which the gNB adds a related indication to a packet header of a data packet. Actually, in addition to the gNB, another network element, for example, a UPF, may also add corresponding indication information to a data packet.

In the foregoing two manners, in both the direct indication and the indirect indication, an indication is added to a subheader of a data packet to indicate a receive window to which each data packet belongs. In addition to performing indication by using a data packet, an additional indication may be further performed, for example, by transmitting a control PDU, to notify the UE of "a quantity or a data volume of data packets in each cycle" and the like. Optionally, the control PDU may be an SDAP control PDU generated by an SDAP layer of the gNB, a PDCP control PDU generated by a PDCP layer of the gNB, an RLC control PDU generated by an RLC layer of the gNB, a MAC control PDU generated by a MAC layer of the gNB, or the like. This is not limited.

For a data packet in each cycle, the gNB may transmit a corresponding control PDU in a corresponding receive window. Correspondingly, the UE receives the control PDU from the gNB within the corresponding receive window. An example in which a first control PDU corresponding to the data packet in the first cycle is transmitted within the first receive window is used for description.

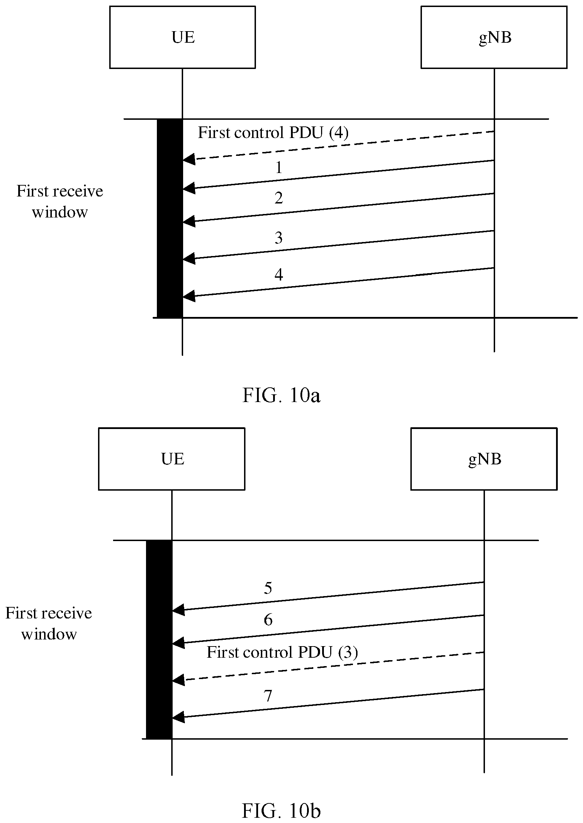

For example, the gNB may first send the data packet in the first cycle to the UE, and then send the first control PDU to the UE. Correspondingly, before the data packet in the first cycle arrives, the UE receives the first control PDU from the gNB. As shown in FIG. 10a, the data packet in the first cycle includes four data packets whose sequence numbers are respectively 1, 2, 3, and 4. The gNB transmits the first control PDU within the first receive window before transmitting the data packets in the first cycle. The first control PDU carries indication information that indicates a quantity 4 of data packets in the first cycle. Optionally, the first control PDU may further carry a PDCP SN. The first control PDU may be transmitted one or more times. In FIG. 10a, an example in which the first control PDU is transmitted once is used for description.

Alternatively, the gNB may first send some of the data packets in the first cycle to the UE, and then send the first control PDU to the UE, and then send remaining data packets of the data packets in the first cycle to the UE. Correspondingly, after some of the data packets in the first cycle arrive, the UE receives the first control PDU from the gNB. As shown in FIG. 10b, the first cycle includes three data packets whose sequence numbers are respectively 5, 6, and 7. Within the first receive window, the gNB first transmits the data packet 5 and 6, and then transmits the first control PDU, and finally transmits the data packet 7. In addition, the first control PDU carries indication information that indicates a quantity 3 of data packets in the first cycle. Likewise, optionally, the first control PDU may further carry a PDCP SN. The first control PDU may be transmitted one or more times. In FIG. 10b, an example in which the first control PDU is transmitted once is used for description.

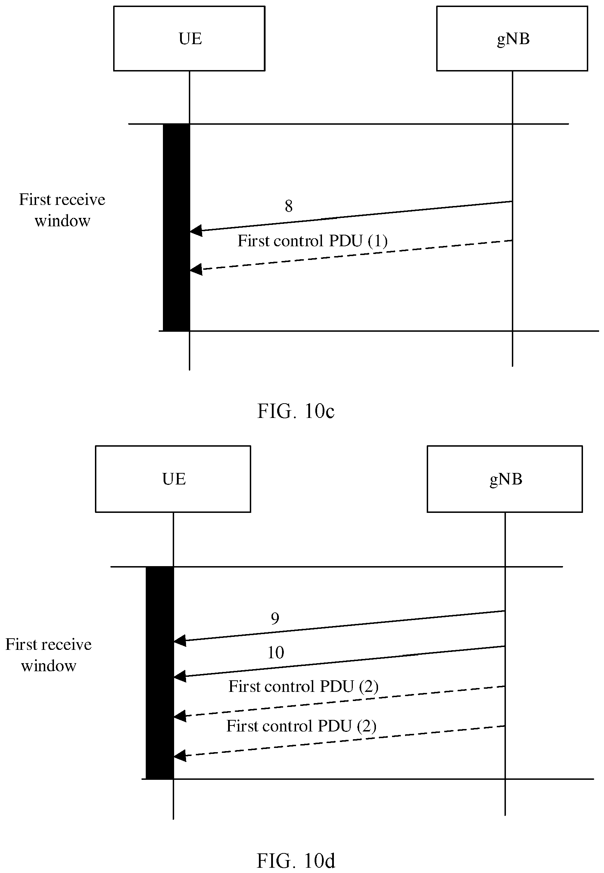

Alternatively, the gNB may first send the data packet in the first cycle to the UE, and then send the first control PDU to the UE. Correspondingly, after all of the data packet in the first cycle arrives, the UE receives the first control PDU from the gNB. As shown in FIG. 10c, the data packet in the first cycle includes a data packet 8. The gNB may first send the data packet 8 to the UE, and then send the first control PDU to the UE. The first control PDU carries indication information that indicates a quantity 1 of data packets included in the data packet in the first cycle, and the first control PDU is transmitted only once. Alternatively, as shown in FIG. 10d, the data packet in the first cycle includes a data packet 9 and a data packet 10. The gNB may first send the data packet 9 and the data packet 10 to the UE, and then send the first control PDU to the UE. The first control PDU carries indication information that indicates a quantity 2 of data packets included in the data packet in the first cycle. Likewise, optionally, the first control PDU may further carry a PDCP SN. The first control PDU may be transmitted one or more times. In FIG. 10c, an example in which the first control PDU is transmitted twice is used for description.

In the foregoing solution, to prevent loss of the first control PDU in a transmission process, the first control PDU may be retransmitted N times. In downlink, a quantity of retransmissions may be determined by the gNB. In uplink, a quantity of retransmissions may be configured by the gNB for the UE.

In the foregoing solution, the UE determines, by using a transmission occasion of a control PDU, a window indicated by the control PDU. For example, if the UE receives a control PDU within the first receive window, it is determined that content "3" carried in the control PDU indicates that three data packets should be received within the first receive window.

In addition, the gNB may alternatively transmit a control PDU before a receive window of a data packet in each cycle. Correspondingly, the UE receives the control PDU before the receive window of the data packet in each cycle. In this case, information about the receive window cannot be indicated by using a receive window in which the control PDU is located, and therefore the control PDU needs to explicitly indicate an ID of the receive window.

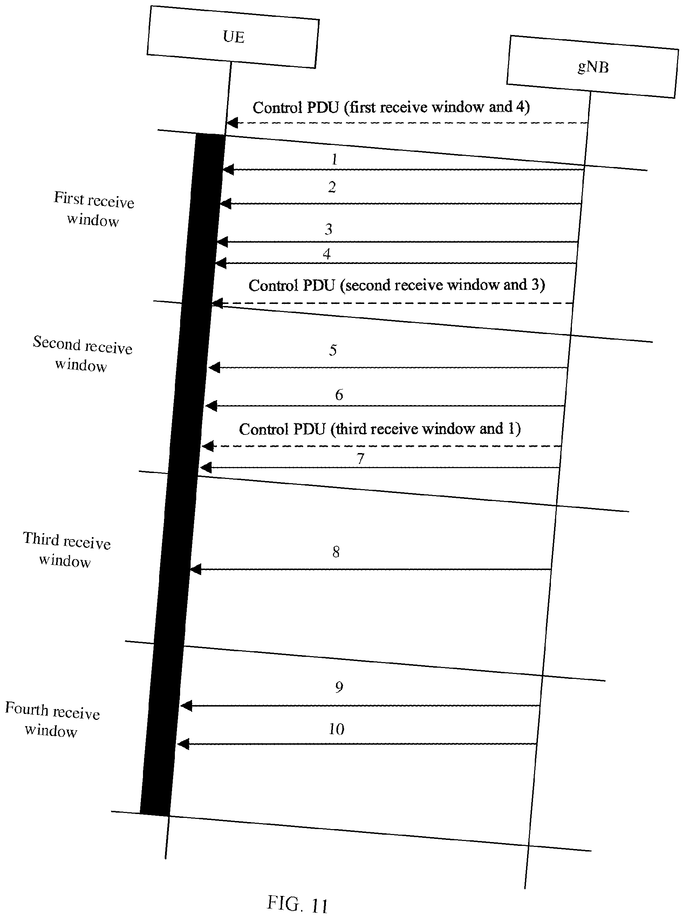

As shown in FIG. 11, the gNB transmits the first control PDU before the first receive window, and content carried in the first control PDU includes the "first receive window" and "4" . The "first receive window" and "4" indicate a quantity of data packets that the UE needs to receive within the first receive window. This is alternatively described as a quantity of data packets in the first cycle. If a quantity of data packets received by the UE within the first receive window is less than 4, the UE does not deliver the data packet in the first cycle to the application layer. Certainly, the "4" may be alternatively replaced with "a data volume of a data packet in the first cycle." A process is similar. For details, refer to the foregoing descriptions. Details are not described herein again. Likewise, the gNB may transmit a second control PDU before the second receive window. Content carried in the second control PDU includes the second receive window and 3, indicating a quantity of data packets that the UE needs to receive within the second receive window. This is alternatively described as a quantity of data packets in the second cycle, or the like.

Optionally, if the gNB always transmits a control PDU of the X^{th} receive window within the (X-K)^{th} receive window before the X^{th} receive window, the control PDU may be transmitted one or more times. After receiving the control PDU within the (X-K)^{th} receive window, the UE may determine a quantity or a data volume of data packets within the K^{th} receive window after the (X-K)^{th} receive window, that is, within the X^{th} receive window. If K is a constant, an ID of a receive window does not need to be explicitly indicated in the control PDU. The first receive window is used as an example for description. The UE may receive the first control PDU from the gNB within the K^{th} receive window before the first receive window, where the first control PDU is used to indicate a quantity or a data volume of data packets in the first cycle corresponding to the first receive window, and K may be a positive integer.

In the foregoing process, it is assumed that a quantity or a data volume of data packets in each cycle changes rapidly, and therefore notification needs to be performed for each cycle. Actually, a quantity or a data volume of data packets transmitted within each receive window is a slowly changing value, and does not change within a period of time. In this case, the gNB may notify, by using a control PDU, the UE of a quantity or a data volume of data packets in each cycle within a future period of time.

Optionally, the gNB may notify, by using a control PDU, the UE of "a quantity or a data volume of data packets in each cycle within a future period of time". After receiving the control PDU, the UE may determine a quantity or a data volume of data packets in each cycle within a future period of time, until an updated control PDU is received next time.

Optionally, the first control PDU may alternatively indicate a quantity or a data volume of data packets in each cycle within a future duration of X, where X is a positive number. After receiving the first control PDU, the UE may determine a quantity or a data volume of data packets in each cycle within duration of X that starts from a moment at which the first control PDU is received. A unit of the duration of X may be a second, or the like.

Optionally, the first control PDU may alternatively indicate a quantity or a data volume of data packets in each cycle within future Y cycles, where Y is a positive integer. After receiving the first control PDU, the UE may determine a quantity or a data volume of data packets in each cycle within Y cycles that start from a cycle in which the first control PDU is received. The first control PDU may carry a value, for example, 2, indicating that a quantity of data packets in each cycle within future Y cycles is 2. Alternatively, the first control PDU may carry an array, for example, 4, 3, 1, 2, 5, indicating that a quantity of data packets in each cycle within future five transmission cycles is respectively 4, 3, 1, 2, and 5, or the like. A manner in which the first control PDU carries a data volume of a data packet in each cycle is similar to the foregoing manner, and is not described one by one.

In this embodiment of this application, regardless of whether a quantity or a data volume of data packets transmitted in each cycle is the same, the UE can determine a receive window corresponding to a data packet in each cycle, and the UE delivers only a data packet that arrives on time within the receive window to the application layer, and does not deliver a late data packet, thereby meeting a requirement of the 3 GPP, and ensuring that all data packets delivered to the application layer are data packets that arrive on time. Correspondingly, a person skilled in the art should understand that, when a receiver is an access network device, the access network device also delivers only a data packet that arrives on time to the application layer, and does not deliver a late data packet to the application layer, thereby meeting a requirement of an industrial control system.

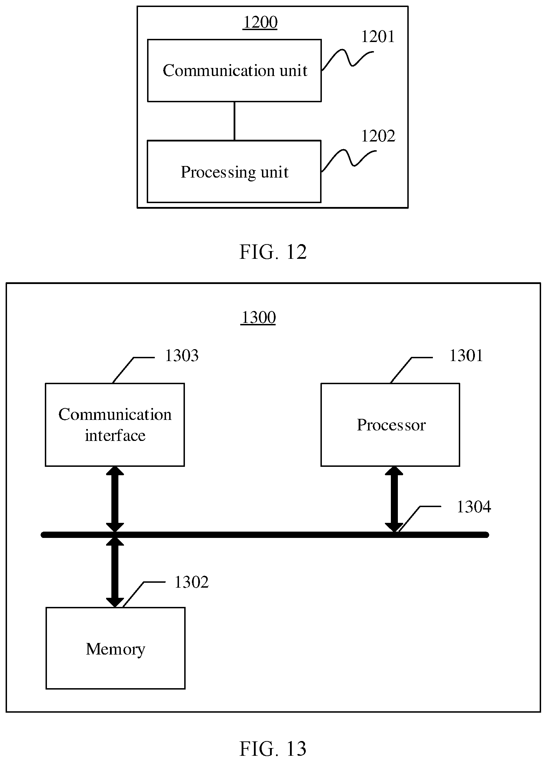

The method described in embodiments of this application is described above in detail with reference to FIG. 1 to FIG. 11. An apparatus provided in embodiments of this application is described below in detail with reference to FIG. 12 and FIG. 13. It should be understood that descriptions of apparatus embodiments correspond to descriptions of method embodiments. For content not described in detail, refer to the descriptions in the foregoing method embodiments.

FIG. 12 is a schematic block diagram of an apparatus 1200 according to an embodiment of this application. The apparatus is configured to implement the functions of the first communication apparatus in the foregoing method embodiments. The apparatus may be a software unit or a chip system. The chip system may include a chip, or may include a chip and another discrete device. The apparatus may include a communication unit 1201, configured to communicate with an external environment. The apparatus may further include a processing unit 1202, configured to perform processing.

In an example, the apparatus 1200 is configured to implement the steps of the first communication apparatus in the foregoing method embodiments. The first communication apparatus may be a communication device, or may be a chip or a circuit configured in a communication device. The communication unit 1201 is configured to perform a sending or receiving operation of the first communication apparatus in the foregoing method embodiments. The processing unit 1202 is configured to perform a processing-related operation of the first communication apparatus in the foregoing method embodiments.

For example, the communication unit 1201 is configured to receive a data packet in a first cycle from a second communication apparatus within a first receive window, where the first receive window is determined based on a first moment at which the data packet in the first cycle arrives at the second communication apparatus and validity duration of the data packet, and the validity duration is a validity time of the data packet in the first cycle; and the processing unit 1202 is configured to deliver the data packet in the first cycle to an application layer within the first receive window.

Division into the units in embodiments of this application is an example, is merely division into logical functions, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software function unit.

It can be understood that, in the foregoing embodiment, the function of the communication unit may be implemented by a transceiver, and the function of the processing unit may be implemented by a processor. The transceiver may include a transmitter and/or a receiver, respectively configured to implement a function of a sending unit and/or a function of a receiving unit. An example is used below for description with reference to FIG. 13.

The communication apparatus 1300 shown in FIG. 13 includes at least one processor 1301. The communication apparatus 1300 may further include at least one memory 1302, configured to store program instructions and/or data. The memory 1302 is coupled to the processor 1301. The coupling in this embodiment of this application may be indirect coupling or a communication connection between apparatuses, units, or modules in an electrical form, a mechanical form, or another form, and is used for information exchange between the apparatuses, the units, or the modules. The processor 1301 and the memory 1302 may perform an operation collaboratively. The processor 1301 may execute the program instructions stored in the memory 1302. At least one of the at least one memory 1302 may be included in the processor 1301.

The apparatus 1300 may further include a communication interface 1303, configured to communicate with another device through a transmission medium, so that the communication apparatus 1300 can communicate with the another device. In this embodiment of this application, the communication interface may be a transceiver, a circuit, a bus, a module, or another type of communication interface. In this embodiment of this application, when the communication interface is a transceiver, the transceiver may include an independent receiver and an independent transmitter; or the communication interface may be a transceiver integrated with a sending function and a receiving function, or may be an interface circuit.

It should be understood that a connection medium between the processor 1301, the memory 1302, and the communication interface 1303 is not limited in this embodiment of this application. In this embodiment of this application, in FIG. 13, the memory 1302, the processor 1301, and the communication interface 1303 are connected by using a communication bus 1304. The bus is represented by a bold line in FIG. 13. A connection manner between other components is described merely as an example and is not construed as a limitation. The bus may include an address bus, a data bus, a control bus, and the like. For ease of representation, only one bold line is used for representation in FIG. 13, but this does not mean that there is only one bus or only one type of bus.

In an example, the apparatus 1300 is configured to implement the steps performed by the first communication apparatus in the foregoing method embodiments. The communication interface 1303 is configured to perform a sending/receiving-related operation of the first communication apparatus in the foregoing method embodiments. The processor 1301 is configured to perform a processing-related operation of the first communication apparatus in the foregoing method embodiments.

For example, the communication interface 1303 is configured to receive a data packet in a first cycle from a second communication apparatus within a first receive window, where the first receive window is determined based on a first moment at which the data packet in the first cycle arrives at the second communication apparatus and validity duration of the data packet, and the validity duration is a validity time of the data packet in the first cycle; and the processor 1301 is configured to deliver the data packet in the first cycle to an application layer within the first receive window.

Further, an embodiment of this application further provides an apparatus, and the apparatus is configured to perform the method in the foregoing method embodiments. An apparatus is provided, including modules configured to perform the method in the foregoing method embodiments. An apparatus is provided, including a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method in the foregoing method embodiments by using a logic circuit or by executing code instructions. A computer-readable storage medium is provided, including a program. When the program is run by a processor, the method in the foregoing method embodiments is performed. A computer program product is provided. The computer program product includes computer program code. When the computer program code is run on a computer, the computer is enabled to implement the method in the foregoing method embodiments. A chip is provided, including a processor. The processor is coupled to a memory, and the memory is configured to store a program or instructions. When the program or the instructions are executed by the processor, the chip is enabled to perform the method in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor

In embodiments of this application, the memory may be a non-transitory memory, for example, a hard disk drive (hard disk drive, HDD) or a solid-state drive (solid-state drive, SSD), or may be a transitory memory (transitory memory), for example, a random access memory (random-access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

All or some of the methods provided in embodiments of this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method is performed by a first communication apparatus, and the method comprises:
receiving a data packet in a first cycle from a second communication apparatus within a first receive window, wherein the first receive window is determined based on a first moment at which the data packet in the first cycle arrives at the second communication apparatus and validity duration, and the validity duration is a validity time of the data packet in the first cycle; and
delivering the data packet in the first cycle to an application layer within the first receive window.

2. The method according to claim 1, wherein a start moment of the first receive window is a first moment or a second moment, and a time difference between the second moment and the first moment is equal to a transmission delay of the data packet in the first cycle.

3. The method according to claim 1 or 2, wherein an end moment of the first receive window is a third moment, a fourth moment, or a fifth moment; and
a time difference between the third moment and the first moment is equal to the validity duration, a time difference between the fourth moment and the first moment is equal to a sum of the validity duration and the transmission delay of the data packet in the first cycle, and a time difference between the fifth moment and the first moment is equal to a sum of the validity duration, the transmission delay of the data packet in the first cycle, and preset duration.

4. The method according to any one of claims 1 to 3, further comprising:
when the data packet in the first cycle meets a first condition, delivering the data packet in the first cycle to the application layer within the first receive window; or
when the data packet in the first cycle does not meet the first condition, skipping delivering the data packet in the first cycle to the application layer within the first receive window.

5. The method according to claim 4, wherein the first condition comprises at least one of the following:
a quantity of data packets in the first cycle is equal to a first quantity, wherein the first quantity is preconfigured, or the first quantity is indicated by the second communication apparatus, or the first quantity is obtained by the first communication apparatus from the application layer; and
a data volume of the data packet in the first cycle is equal to a first data volume, wherein the first data volume is preconfigured, or the first data volume is indicated by the second communication apparatus, or the first data volume is obtained by the first communication apparatus from the application layer.

6. The method according to claim 5, wherein when the first quantity or the first data volume is indicated by the second communication apparatus, the method further comprises:
receiving a first control protocol data unit PDU from the second communication apparatus, wherein the first control PDU indicates the first quantity or the first data volume.

7. The method according to claim 6, wherein the receiving a first control PDU from the second communication apparatus comprises:
receiving the first control PDU from the second communication apparatus within the first receive window; or
receiving the first control PDU from the second communication apparatus before the first receive window.

8. The method according to claim 7, wherein the receiving the first control PDU from the second communication apparatus within the first receive window comprises:
receiving the first control PDU from the second communication apparatus before the data packet in the first cycle arrives;
receiving the first control PDU from the second communication apparatus after the data packet in the first cycle arrives; or
receiving the first control PDU from the second communication apparatus after some of the data packets in the first cycle arrive.

9. The method according to claim 7, wherein the receiving the first control PDU from the second communication apparatus before the first receive window comprises:
receiving the first control PDU from the second communication apparatus within a K^{th} receive window before the first receive window, wherein K is a positive integer.

10. The method according to any one of claims 6 to 9, wherein the first control PDU further indicates a quantity or a data volume of data packets in each cycle within duration of X, or the first control PDU further indicates a quantity or a data volume of data packets in each cycle within Y cycles, wherein X is a positive number, and Y is a positive integer.

11. The method according to claim 5, wherein when the first quantity or the first data volume is indicated by the second communication apparatus, at least one of the data packets in the first cycle comprises indication information, wherein the indication information indicates the first quantity or the first data volume.

12. The method according to any one of claims 4 to 11, wherein when the data packet in the first cycle does not meet the first condition, the method further comprises:
deleting the data packet in the first cycle; and
updating a start location of a packet data convergence protocol PDCP window to a PDCP sequence number of a data packet to be received in a next cycle of the first cycle.

13. The method according to claim 1, wherein each of data packets in the first cycle comprises first indication information, and the method further comprises:
when the first indication information comprised in each of the data packets in the first cycle indicates the first receive window, delivering the data packets in the first cycle to the application layer within the first receive window; or
when the first indication information comprised in at least one of the data packets in the first cycle does not indicate the first receive window, skipping delivering the data packets in the first cycle to the application layer within the first receive window.

14. The method according to claim 13, wherein that the first indication information indicates the first receive window specifically comprises:
the first indication information indicates a moment and/or an index of the first receive window, or the first indication information indicates a moment and/or an index of a first send window, wherein the first send window corresponds to the first receive window.

15. A communication apparatus, comprising:
a communication unit, configured to receive a data packet in a first cycle from a second communication apparatus within a first receive window, wherein the first receive window is determined based on a first moment at which the data packet in the first cycle arrives at the second communication apparatus and validity duration, and the validity duration is a validity time of the data packet in the first cycle; and
a processing unit, configured to deliver the data packet in the first cycle to an application layer within the first receive window.

16. The apparatus according to claim 15, wherein a start moment of the first receive window is a first moment or a second moment, and a time difference between the second moment and the first moment is equal to a transmission delay of the data packet in the first cycle.

17. The apparatus according to claim 15 or 16, wherein an end moment of the first receive window is a third moment, a fourth moment, or a fifth moment; and
a time difference between the third moment and the first moment is equal to the validity duration, a time difference between the fourth moment and the first moment is equal to a sum of the validity duration and the transmission delay of the data packet in the first cycle, and a time difference between the fifth moment and the first moment is equal to a sum of the validity duration, the transmission delay of the data packet in the first cycle, and preset duration.

18. The apparatus according to any one of claims 15 to 17, wherein the processing unit is further configured to:
when the data packet in the first cycle meets a first condition, deliver the data packet in the first cycle to the application layer within the first receive window; or
when the data packet in the first cycle does not meet the first condition, skip delivering the data packet in the first cycle to the application layer within the first receive window.

19. The apparatus according to claim 18, wherein the first condition comprises at least one of the following:
a quantity of data packets in the first cycle is equal to a first quantity, wherein the first quantity is preconfigured, or the first quantity is indicated by the second communication apparatus, or the first quantity is obtained by the first communication apparatus from the application layer; and
a data volume of the data packet in the first cycle is equal to a first data volume, wherein the first data volume is preconfigured, or the first data volume is indicated by the second communication apparatus, or the first data volume is obtained by the first communication apparatus from the application layer.

20. The apparatus according to claim 19, wherein when the first quantity or the first data volume is indicated by the second communication apparatus, the communication unit is further configured to:
receive a first control protocol data unit PDU from the second communication apparatus, wherein the first control PDU indicates the first quantity or the first data volume.

21. The apparatus according to claim 20, wherein that the communication unit is further configured to receive a first control PDU from the second communication apparatus comprises:
receive the first control PDU from the second communication apparatus within the first receive window; or
receive the first control PDU from the second communication apparatus before the first receive window.

22. The apparatus according to claim 21, wherein that the communication unit is further configured to receive the first control PDU from the second communication apparatus within the first receive window comprises:
receive the first control PDU from the second communication apparatus before the data packet in the first cycle arrives;
receive the first control PDU from the second communication apparatus after the data packet in the first cycle arrives; or
receive the first control PDU from the second communication apparatus after some of the data packets in the first cycle arrive.

23. The apparatus according to claim 21, wherein that the communication unit is further configured to receive the first control PDU from the second communication apparatus before the first receive window comprises:
receive the first control PDU from the second communication apparatus within a K^{th} receive window before the first receive window, wherein K is a positive integer.

24. The apparatus according to any one of claims 20 to 23, wherein the first control PDU further indicates a quantity or a data volume of data packets in each cycle within duration of X, or the first control PDU further indicates a quantity or a data volume of data packets in each cycle within Y cycles, wherein X is a positive number, and Y is a positive integer.

25. The apparatus according to claim 19, wherein when the first quantity or the first data volume is indicated by the second communication apparatus, at least one of the data packets in the first cycle comprises indication information, wherein the indication information indicates the first quantity or the first data volume.

26. The apparatus according to any one of claims 18 to 25, wherein when the data packet in the first cycle does not meet the first condition, the processing unit is further configured to:
delete the data packet in the first cycle; and
update a start location of a packet data convergence protocol PDCP window to a PDCP sequence number of a data packet to be received in a next cycle of the first cycle.

27. The apparatus according to claim 15, wherein each of data packets in the first cycle comprises first indication information, and the processing unit is further configured to:
when the first indication information comprised in each of the data packets in the first cycle indicates the first receive window, deliver the data packets in the first cycle to the application layer within the first receive window; or
when the first indication information comprised in at least one of the data packets in the first cycle does not indicate the first receive window, skip delivering the data packets in the first cycle to the application layer within the first receive window.

28. The apparatus according to claim 27, wherein that the first indication information indicates the first receive window specifically comprises:
the first indication information indicates a moment and/or an index of the first receive window, or the first indication information indicates a moment and/or an index of a first send window, wherein the first send window corresponds to the first receive window.

29. A communication apparatus, comprising a module configured to implement the method according to any one of claims 1 to 14.

30. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, wherein the processor is configured to implement the method according to any one of claims 1 to 14 by using a logic circuit or by executing code instructions.

31. A computer-readable storage medium, comprising a program, wherein when the program is run by a processor, the method according to any one of claims 1 to 14 is performed.
